# FASCICULE DE BREVET EUROPEEN

(11) **EP 3 970 228 B1**
(45) Date de publication et mention de la délivrance du brevet: **03.06.2026**
(21) Numéro de dépôt: 20726343.5
(22) Date de dépôt: 12.05.2020
(51) Int. Cl.: H01M 10/625, H01M 10/613, H01M 10/6569, H01M 10/6556, H01M 10/655, H01M 50/204

(54) **DISPOSITIF DE REFROIDISSEMENT D'UN SYSTEME DE STOCKAGE ELECTRIQUE ET PROCEDE METTANT EN OUVRE LE DISPOSITIF DE REFROIDISSEMENT**
KÜHLVORRICHTUNG EINES ELEKTRISCHEN SPEICHERSYSTEMS UND VERFAHREN UNTER VERWENDUNG DER KÜHLVORRICHTUNG
COOLING DEVICE OF AN ELECTRICAL STORAGE SYSTEM AND METHOD USING THE COOLING DEVICE

(30) Priorité: 15.05.2019 FR 1905091
(43) Date de publication de la demande: 23.03.2022
(73) Titulaire: Valeo Electrification, 95892 Cergy Pontoise (FR)
(72) Inventeur: AZZOUZ, Kamel, 78322 LE MESNIL SAINT DENIS CEDEX (FR); MAMMERI, Amrid, 78322 LE MESNIL SAINT DENIS CEDEX (FR); GARNIER, Sébastien, 78322 LE MESNIL SAINT DENIS CEDEX (FR)
(74) Mandataire: Valeo Powertrain Systems
(86) Numéro de dépôt international: PCT/EP2020/063229
(87) Numéro de publication internationale: WO 2020/229493

(56) Documents cités:
- WO-A1-2020/099738
- WO-A1-2020/099739
- CN-U- 203 279 429
- US-A1- 2007 133 173

## Description

La présente invention se situe dans le domaine des dispositifs de traitement thermique des systèmes de stockage électrique d'un véhicule automobile, et concerne plus particulièrement un dispositif de refroidissement d'éléments de batterie susceptibles de s'échauffer. La présente invention a aussi pour objet un procédé mettant en œuvre le dispositif de refroidissement.

Dans le domaine des véhicules automobiles, des dispositifs de traitement thermique permettent de modifier une température d'une batterie électrique, et notamment de diminuer la température de la batterie électrique, qui tend à s'échauffer au cours de son utilisation. D'une manière générale, de tels dispositifs de traitement thermique de batteries électriques font appel à des échangeurs de chaleur. Les différentes cellules de batterie d'un système de stockage électrique peuvent notamment être refroidies au moyen d'une plaque froide à l'intérieur de laquelle circule un fluide de refroidissement, la plaque étant en contact avec les cellules de batterie à refroidir. Il a pu être constaté que de tels échangeurs de chaleur peuvent conduire à un refroidissement non homogène des batteries électriques d'un même système de stockage électrique, entrainant alors une diminution des performances de ces batteries électriques. Ces dispositifs de traitement thermique présentent en outre une résistance thermique élevée en raison des épaisseurs de matière présentes entre le fluide de refroidissement et les cellules de batterie, un autre paramètre contribuant à la résistance thermique élevée étant le contact entre les plaques de refroidissement, les interfaces thermiques (PAD) et les surfaces des cellules.

Dans le but d'apporter une réponse à ces différentes problématiques, plusieurs dispositifs sont connus.

On connait notamment le document FR3037727 dans lequel un dispositif de refroidissement des batteries électriques de voitures électriques ou hybrides est divulgué. Plus particulièrement, ce document concerne un dispositif de refroidissement des cellules des batteries électriques d'un pack batterie de type lon-Lithium. Il comprend un boitier fermé hermétiquement dans lequel circule un fluide diphasique et une couche d'air. Les cellules de stockage électrique sont partiellement plongées dans le fluide diphasique, de sorte que l'échange thermique entre les cellules et le fluide diphasique soit assuré. Ainsi, le refroidissement des batteries électriques est effectué par immersion des cellules des batteries électriques dans ledit fluide. La réserve du liquide diphasique consiste en une cuve située à l'extérieur du boitier et reliée audit boitier afin de permettre la circulation du fluide diphasique.

Toutefois, l'immersion des cellules de stockage électrique dans un fluide, notamment diélectrique, ne permet pas un refroidissement homogène des cellules.

L'invention a pour objectif d'offrir une alternative de refroidissement d'éléments de batterie en palliant les problèmes susmentionnés de l'état de la technique, en proposant un dispositif de refroidissement qui abaisse et homogénéise la température de l'élément de batterie, optimisant alors la durée de vie ainsi que la performance d'un tel élément de batterie, notamment d'un système de stockage électrique pour véhicule automobile.

Plus particulièrement, l'invention vise à protéger un condenseur pour un tel dispositif de refroidissement qui permette la mise en œuvre d'un refroidissement de cellules de batterie par pulvérisation d'un fluide diélectrique.

Des solutions existantes proposent un dispositif de refroidissement pour des éléments de batteries comportant un condenseur, tel que par exemple la demande US2016104925. Cependant la solution présentée dans ce document est couteuse et ne propose pas un condenseur présentant des performances de refroidissement suffisantes. Les publications US 2007/133173 A1 et CN 203 279 429 U divulguent des condenseurs pour un fluide diélectrique.

Selon la présente invention, le condenseur pour un dispositif de refroidissement d'au moins un élément de batterie d'un véhicule automobile, configuré pour liquéfier un fluide diélectrique déposé sous forme de vapeur en surface dudit condenseur, est caractérisé en ce que le condenseur comporte au moins une paroi principale et une pluralité de parois secondaires formant saillie de la paroi principale et participant à former une chambre de réception d'un ou plusieurs éléments de batterie, le condenseur comportant un circuit de fluide de refroidissement ménagé dans l'épaisseur de la paroi principale et au moins un circuit de fluide diélectrique sous forme liquide ménagé dans l'épaisseur d'au moins une paroi secondaire, ledit circuit de fluide électrique étant équipé d'au moins une buse de projection du fluide diélectrique.

On entend par un circuit ménagé dans l'épaisseur, aussi bien une configuration avec des conduits creusés dans la matière qu'une configuration avec des coques rapportées l'une contre l'autre pour former une paroi du condenseur, au moins l'une des coques étant emboutie pour former un canal dudit circuit.

Le condenseur selon l'invention peut comporter l'une quelconque au moins des caractéristiques techniques suivantes, prises seules ou en combinaison :
- le circuit de fluide de refroidissement est ménagé uniquement dans l'épaisseur de la paroi principale, et le circuit de fluide diélectrique s'étend dans l'épaisseur de la paroi principale et de chacune des parois secondaires,
- la paroi principale est pourvue sur une de ces faces d'une arrivée de fluide de refroidissement et d'une sortie de fluide de refroidissement entre lesquelles s'étend le circuit de fluide de refroidissement,
- le circuit de fluide diélectrique est ménagé dans une zone périphérique de la paroi principale, de manière à dégager une zone centrale pour le circuit de fluide de refroidissement. Ainsi, le condenseur peut assurer sa fonction première de liquéfier le fluide diélectrique vaporisé suite à sa projection sur les éléments de batterie, le fluide vaporisé pouvant être présent sur toute la surface de la paroi principale du condenseur configurée pour surplomber l'élément de batterie, sans que cette surface fonctionnelle de condensation ne soit perturbée par le passage d'un fluide diélectrique à la température différente de celle du fluide de refroidissement,
- un même côté de la paroi principale est équipé d'une arrivée de fluide diélectrique, de l'arrivée de fluide de refroidissement et de la sortie de fluide de refroidissement, pour faciliter une connectique avec des moyens d'alimentation en fluide de refroidissement et en fluide diélectrique de la paroi principale,
- la pluralité de parois secondaires formant saillie de la paroi principale comporte une première paroi secondaire latérale qui équipe une première extrémité longitudinale de la paroi principale, une deuxième paroi secondaire latérale qui équipe une deuxième extrémité longitudinale de la paroi principale et une paroi secondaire intermédiaire qui est interposée entre les parois secondaires latérales, la paroi secondaire intermédiaire participant à délimiter avec une partie de la paroi principale et respectivement l'une et l'autre des parois secondaires latérales deux chambres de réception pour un élément de batterie,
- le circuit de fluide diélectrique comporte plusieurs de branches en parallèle sur chacune des parois secondaires, de manière à pulvériser le fluide diélectrique sur des hauteurs différentes des éléments de batterie,
- des buses de projection sont disposées sur chacune des faces opposées de la paroi secondaire intermédiaire.

L'invention concerne également un dispositif de refroidissement comprenant un premier boîtier et une pluralité d'étages d'éléments de batterie disposés dans le premier boîtier, chaque étage d'éléments de batterie étant équipé d'au moins un condenseur tel que décrit précédemment, le condenseur étant disposé par rapport aux éléments de batterie de l'étage correspondant de manière à ce que les buses puissent projeter le fluide diélectrique sur les éléments de batterie d'un même étage, ledit système comportant en outre un bac de récupération du fluide diélectrique qui est commun à la pluralité d'étages d'éléments de batterie, le dispositif de refroidissement comprenant des moyens de recirculation du fluide diélectrique qui sont pourvus d'une pompe et qui relient le bac de récupération à au moins une arrivée de fluide diélectrique que comprend chacun des circuits de fluide diélectrique.

Les éléments de batterie sont agencés en une superposition étagée, formant une pluralité d'étages d'éléments de batterie, et chaque étage d'élément de batterie peut comporter un ou plusieurs éléments de batterie. De la sorte, le dispositif de refroidissement peut comporter une pluralité d'éléments de batterie réparties en une pluralité de colonnes d'éléments de batterie et une pluralité d'étages, chaque étage d'éléments de batterie étant pourvu d'un condenseur et d'un circuit de fluide diélectrique apte à pulvériser le fluide électrique sur les éléments de batterie de l'étage correspondant. Ici, quelle que soit la configuration et le nombre d'étage et d'éléments de batterie par étage, le dispositif est configuré de sorte qu'un bac de récupération est à même de recevoir le fluide diélectrique pulvérisé sur chacun des étages d'un ensemble donné d'éléments de batterie, et qu'une pompe est à même d'alimenter en fluide diélectrique en provenance du bac de récupération l'ensemble des circuits de fluide diélectrique permettant la pulvérisation de l'ensemble donné d'éléments de batterie.

Le dispositif de refroidissement peut comprendre un plateau qui est disposé dans le premier boîtier pour supporter chacun des étages d'éléments de batterie, chaque plateau étant configuré pour permettre un écoulement par gravité du fluide diélectrique vers le bac de récupération. Cette configuration peut consister en un ou plusieurs trous réalisés dans le plateau ou bien en un passage aménagé entre le plateau et les parois délimitant le premier boîtier, les dimensions du plateau étant alors inférieures à celle du premier boîtier dans le plan du plateau concerné.

Au moins un plateau, notamment le plateau inférieur, sur lequel repose un étage d'éléments de batterie, notamment l'étage inférieur, peut être percé d'une pluralité d'orifices pour permettre le filtrage du fluide diélectrique vers le bac de récupération.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue en perspective d'une coupe d'un système de stockage électrique équipé d'un dispositif de refroidissement d'éléments de batterie conforme à la présente invention,
[Fig.2] illustre une vue de face de la coupe du système de stockage représentée sur la figure 1,
[Fig.3] illustre une vue en perspective partielle du système de stockage illustré sur les figures 1 et 2, un premier boîtier étant notamment retiré pour rendre bien visible le dispositif de refroidissement et pour illustrer schématiquement une conduite de recirculation et une pompe du dispositif de refroidissement,
[Fig.4] illustre une vue en perspective d'une première variante d'éléments de batterie susceptibles d'être refroidis par le dispositif de refroidissement représenté sur les figures 1 à 3
[Fig.5] illustre une vue en perspective d'une deuxième variante d'éléments de batterie susceptibles d'être refroidis par le dispositif de refroidissement représenté sur les figures 1 à 3,
[Fig.6] illustre une vue en perspective d'un condenseur constitutif d'une variante de réalisation du dispositif de refroidissement représenté sur les figures 1 à 3 et destiné à refroidir les éléments de batterie illustré sur la figure 4 ou 5,
[Fig.7] illustre une vue en perspective du condenseur illustré sur la figure 6,
[Fig.8] illustre une vue schématique du condenseur illustré sur les figures 6 et 7, pour rendre visibles les canaux de circulation de fluide diélectrique présents dans l'épaisseur du condenseur,
[Fig.9] illustre une vue en perspective éclatée du condenseur illustré sur les figures 6 à 8.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

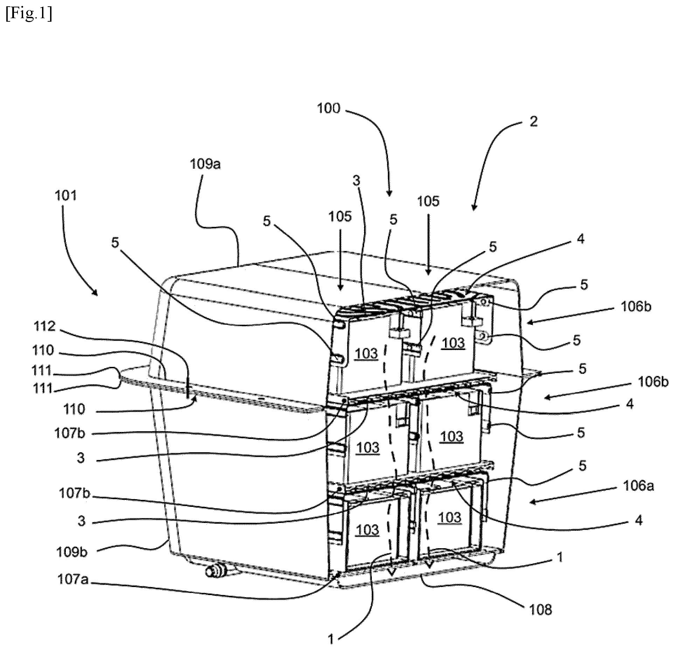

Sur la figure 1, un véhicule automobile à motorisation électrique ou hybride est pourvu d'un système de stockage électrique 100 destiné à fournir une énergie électrique à un moteur électrique équipant le véhicule automobile en vue de son déplacement. Le système de stockage électrique 100 comprend un premier boîtier 101 qui loge une pluralité d'éléments de batterie 103.

Le premier boîtier 101 comprend deux demi-coquilles 109a, 109b, dont une première coquille 109a et une deuxième coquille 109b, qui sont agencées en cuvette et qui sont jointes l'une à l'autre par l'intermédiaire de leur rebords 110. A cet effet, chaque rebord 110 est pourvu d'une lèvre 111, la lèvre 111 de la première coquille 109a étant fixée à la lèvre 111 de la deuxième coquille 109b par l'intermédiaire de moyens de jonction réversible 112, du type vissage ou analogue.

Les éléments de batterie 103 sont conformés en un parallélépipède et sont agencés les uns par rapport aux autres en étant disposés en une superposition étagée. Plus particulièrement, les éléments de batterie 103 sont empilés les uns sur les autres selon plusieurs colonnes 105 en étant répartis selon plusieurs étages 106a, 106b. En d'autres termes, chaque étage 106a, 106b d'éléments de batterie 103 comprend préférentiellement une pluralité d'éléments de batterie 103 en fonction du nombre de colonnes 105, étant entendu que le nombre d'étage et de colonnes d'éléments de batterie varie en fonction de l'encombrement autorisé du premier boîtier et en fonction de la quantité d'énergie électrique à stocker. Dans un même étage 106a, 106b d'éléments de batterie 103, ces derniers sont disposés côte-à-côte et chaque étage 106a, 106b d'éléments de batterie 103 est porté par un plateau 107a, 107b sur lesquels les éléments de batterie 103 reposent.

Selon l'exemple illustré, les éléments de batterie 103 sont au nombre de six et sont répartis sur deux colonnes 105 et trois étages 106a, 106b, chaque colonne 105 comprenant trois éléments de batterie 103 et chaque étage 106a, 106b comprenant deux éléments de batterie 103. Tel que cela a été précisé, le nombre de colonnes 105 et le nombre d'étages 106a, 106b sont susceptibles d'être différents de l'exemple illustré, en étant notamment supérieurs.

Au fur et à mesure de leur mise en fonctionnement, les éléments de batterie 103 tendent à s'échauffer. Aussi, le véhicule automobile est équipé d'un dispositif de refroidissement 2 des éléments de batterie 103. Avantageusement, le dispositif de refroidissement 2 de la présente invention est à même de refroidir simultanément chacun des étages 106a, 106b d'éléments de batterie 103. A cet effet, le dispositif de refroidissement 2 associe au moins un circuit de fluide diélectrique 5 qui est agencé pour pulvériser un fluide diélectrique 1 sur un étage 106a, 106b correspondant d'éléments de batterie 103 et au moins un condenseur 3 logeant un circuit de fluide de refroidissement 4 qui est prévu pour faire passer d'un état vapeur à un état liquide le fluide diélectrique 1 pulvérisé sur les éléments de batterie 103 et transformé sous forme de vapeur sous l'effet de la chaleur dégagée par les éléments de batterie.

Le fluide de refroidissement 4 peut notamment consister en un coolant ou un fluide réfrigérant, et par exemple consister en de l'eau glycolée, du R134a ou du 1234yf, ou bien encore du CO2, sans que cette liste soit limitative.

En ce qui concerne le fluide diélectrique, celui-ci est choisi en fonction de son point de changement de phase. A titre d'exemple, le fluide choisi ici doit présenter une température d'évaporation à pression atmosphérique supérieure à 32, 33 ou 34 degrés Celsius et une température de condensation inférieure à 31, 30 ou 29 degrés Celsius.

En d'autres termes, le fluide diélectrique pulvérisé sous forme liquide sur les éléments de batterie d'un étage donné récupère des calories dégagées par ces éléments de batterie et est ainsi transformé en vapeur. La vapeur monte pour venir au contact du condenseur 3, à l'intérieur duquel peut circuler un fluide de refroidissement, et le condenseur récupère les calories emmagasinées précédemment par le fluide diélectrique jusqu'à le liquéfier. Sous forme liquide, et en gouttelettes, le fluide diélectrique chute par gravité dans le premier boîtier.

Plus particulièrement, le dispositif de refroidissement de la présente invention comprend autant de circuit de fluide diélectrique 5 que le premier boîtier 101 loge d'étages 106a, 106b d'éléments de batterie 103. Plus particulièrement encore, le dispositif de refroidissement 2 de la présente invention comprend avantageusement autant de condenseur 3 que le premier boîtier 101 loge d'étages 106a, 106b d'éléments de batterie 103. De plus, chaque circuit de fluide diélectrique 5 est avantageusement associé à un condenseur 3 correspondant pour optimiser une condensation du fluide diélectrique 1, et consécutivement un refroidissement des éléments de batterie 103, étage par étage, une telle association étant la plus compacte possible à l'intérieur du premier boîtier 101 qui délimite un espace confiné souhaité le plus petit possible.

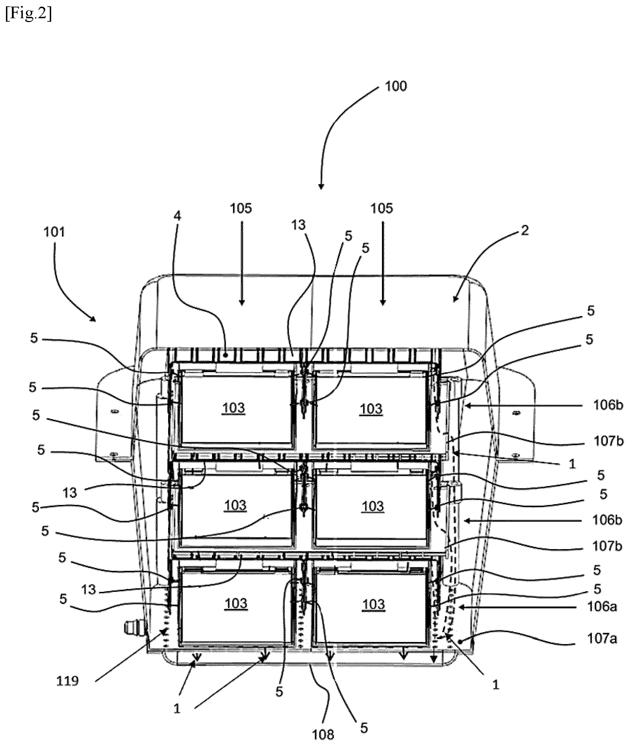

Tel que cela est plus particulièrement visible sur la figure 2, le dispositif de refroidissement 2 comprend le premier boîtier 101 dont un fond constitue un bac de récupération 108 du fluide diélectrique 1 qui s'écoule par gravité d'un étage 106a, 106b d'éléments de batterie 103 à un étage inférieur 106a, 106b d'éléments de batterie 103. Plus particulièrement, le bac de récupération est utilisé pour la récupération du fluide diélectrique ayant été vaporisé par chacun des condenseurs. A cet effet, chacun des plateaux supportant les étages d'éléments de batterie est configuré pour permettre le passage de fluide par gravité en direction du bac de récupération.

On distingue, parmi les plateaux 107a, 107b sur lesquels repose un étage 106a, 106b respectif d'éléments de batterie 103, un plateau inférieur 107a sur lequel repose un étage inférieur 106a d'éléments de batterie 103. On comprend que l'étage inférieur 106a est celui des étages 106a, 106b qui ne surplombe aucun autre étage et qui est donc le plus bas des étages 106a, 106b de la superposition étagée des éléments de batterie 103 décrites précédemment, en se référant à un agencement vertical et au sens d'écoulement par gravité du fluide diélectrique sous forme liquide. On comprend aussi que les étages supérieurs 106b d'éléments de batterie 103 porté par un plateau supérieur 107b correspondant surplombent au moins un autre étage 106a, 106b d'éléments de batterie 103.

Une fois cette distinction faite, il convient de noter que le plateau inférieur 107a est percé d'une pluralité d'orifices 119 permettant l'écoulement du fluide diélectrique à son travers en direction du bac de récupération. Les orifices 119 sont dimensionnés pour permettre une opération de filtrage du fluide diélectrique avant que celui-ci ne pénètre dans le bac de récupération. Afin de permettre une opération de filtrage efficace, le plateau inférieur 107a est dimensionné pour être au contact sur son pourtour avec les parois délimitant le premier boîtier.

Il convient également de noter que les plateaux supérieurs 107b présentent une surface pleine, non percée, et qu'ils sont dimensionnés pour former un passage en périphérie entre les pourtours du plateau correspondant et les parois délimitant le premier boîtier. On comprend que ces plateaux supérieurs 107b surplombent un étage inférieur et donc un condenseur et qu'il n'est pas souhaitable que du fluide diélectrique sous forme liquide viennent couler sur la face supérieure du condenseur, c'est-à-dire sur la face en regard du plateau supérieur. Dès lors, il est notable que selon l'invention, et tel que cela est illustré par des pointillés sur la figure 2, le fluide diélectrique sous forme liquide s'évacue par les côtés du plateau dans les étages supérieurs en tombant sur le plateau inférieur, le fluide diélectrique étant apte à passer dans le bac de récupération via les orifices 119 lorsque ce fluide stagne sur le plateau inférieur 107a.

Dans une variante non représentée, on pourra prévoir que chacun, ou au moins certains, des plateaux supérieurs soient également perforés, dès lors que le condenseur que ces plateaux perforés surplombent sont agencés de manière à présenter un plan incliné par rapport au plan du plateau correspondant. Dès lors, l'eau s'écoulant à travers les plateaux supérieurs par les perforations n'est pas en mesure de stagner entre le condenseur et le plateau supérieur correspondant et peut s'écouler sur les côtés pour venir tomber par gravité dans le bac de récupération.

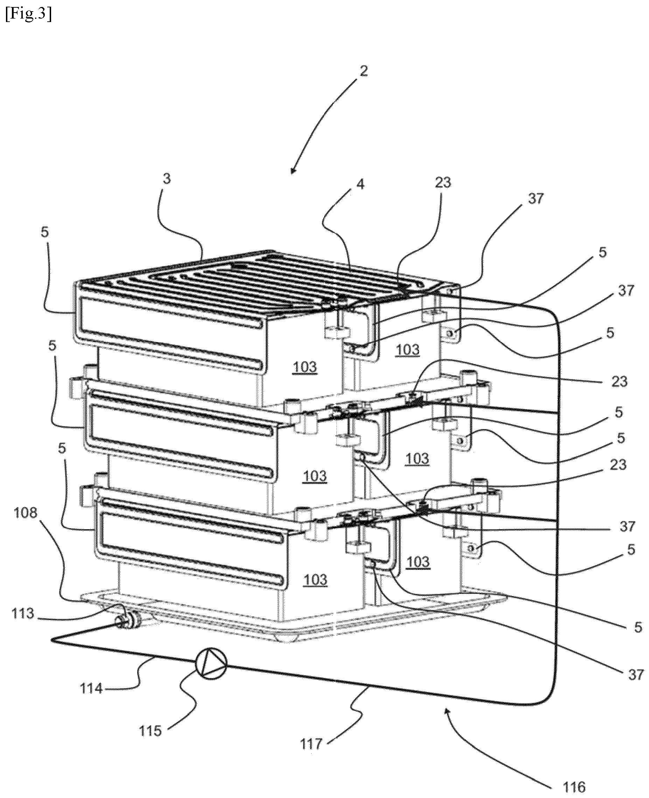

En se reportant sur la figure 3, le bac de récupération 108 est pourvu d'une durite d'évacuation 113 du fluide diélectrique 1 récupéré à l'intérieur du bac de récupération 108, la durite d'évacuation 113 étant en communication fluidique avec une conduite de recirculation 114 du fluide diélectrique 1. La conduite de recirculation 114 est équipée d'une pompe 115 pour ramener le fluide diélectrique 1 à chacune des arrivées de fluide diélectrique 23 équipant un condenseur. Ainsi, la pompe 115, qui est commune à chacun des étages d'éléments de batterie du dispositif de refroidissement 2, est à même d'alimenter en fluide diélectrique 1 l'ensemble des circuits de fluide diélectrique 5 que comprend le dispositif de refroidissement 2, ce qui est avantageux en termes de coût de réalisation. On comprend qu'un répartiteur, non représenté sur la figure, est apte à alimenter en fluide diélectrique 1 l'ensemble des circuits de fluide diélectrique 5 que comprend le dispositif de refroidissement 2 et qui équipent un étage 106a, 106b respectif d'éléments de batterie 103.

Tel qu'illustré, il est notable que les arrivés de fluide diélectrique 23 soient toutes agencées d'un même côté de chaque condenseur 3, pour faciliter la répartition du fluide diélectrique récupéré dans le bac de récupération commun dans chacune des arrivées de fluide diélectrique.

Chaque circuit de fluide diélectrique 5 est pourvu d'au moins une buse de projection 37 qui est à même de pulvériser le fluide diélectrique 1 à l'état liquide vers les éléments de batterie 103 afin de les refroidir. On comprend ainsi que le fluide diélectrique 1 parcourt une boucle de circulation 116 comprenant le bac de récupération 108 du fluide diélectrique 1 à l'état liquide, la conduite de recirculation 114 du fluide diélectrique 1 équipée de la pompe 115 qui alimente, par l'intermédiaire de moyens de recirculation 117, conjointement chaque circuit de fluide diélectrique 5 équipant un étage 106a, 106b d'éléments de batterie 103, les buses de projection 37 des circuits de fluide diélectrique 5 aspergeant les éléments de batterie 103 de fluide diélectrique 1 qui se vaporise à leur contact, puis qui se liquéfie au contact des condenseurs 3 pour s'égoutter par gravité à l'intérieur d'un bac de récupération 108 commun. On comprend le caractère avantageux de la présente invention qui réside notamment en une mutualisation des moyens de refroidissement énoncés pour chacun des étages 106a, 106b de l'agencement en superposition étagée des éléments de batterie 103.

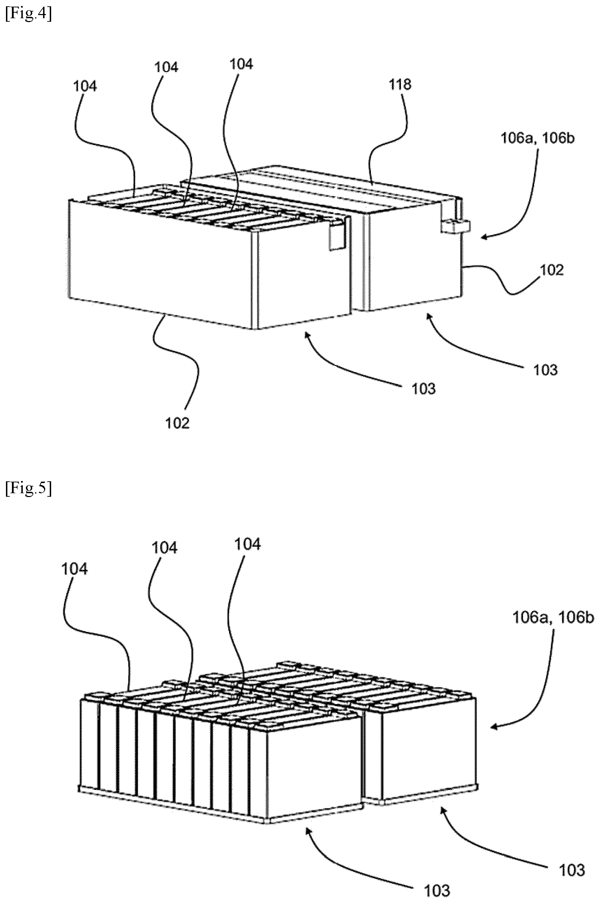

Sur la figure 4, est représenté un étage 106a, 106b d'éléments de batterie 103 selon une première variante de réalisation. Chaque élément de batterie 103 comprend un deuxième boîtier 102 qui loge une pluralité de cellules de stockage électrique 104. Le deuxième boîtier 102 comprend un couvercle 118, ôté de l'un des deuxièmes boîtiers 102 pour rendre apparentes les cellules de stockage électrique 104. Dans cette première variante de réalisation, le fluide diélectrique pulvérisé via les buses équipant le circuit de fluide diélectrique entre en contact avec le deuxième boîtier et se vaporise sous l'effet de la chaleur dégagée par ce deuxième boîtier. Le refroidissement de ce deuxième boîtier génère une baisse de température de l'enceinte dans laquelle sont logées les cellules de stockage électrique et donc une baisse de température des cellules elles-mêmes.

Sur la figure 5, est représenté un étage 106a, 106b d'éléments de batterie 103 selon une deuxième variante de réalisation. Chaque élément de batterie 103 comprend uniquement une pluralité de cellules de stockage électrique 104. Dans cette deuxième variante de réalisation, dans laquelle les cellules de stockage électrique sont directement en regard du condenseur, le fluide diélectrique pulvérisé via les buses équipant le circuit de fluide diélectrique entre en contact directement avec les cellules de stockage électrique et se vaporise sous l'effet de la chaleur dégagée par chacune de ces cellules.

On comprend que chaque cellule de stockage électrique 104 est l'unité fonctionnelle de l'élément de batterie 103 qui fournit au moins partiellement au moteur électrique l'énergie électrique qui lui est nécessaire. La cellule de stockage électrique 104 est par exemple une cellule Ion-Lithium ou analogue.

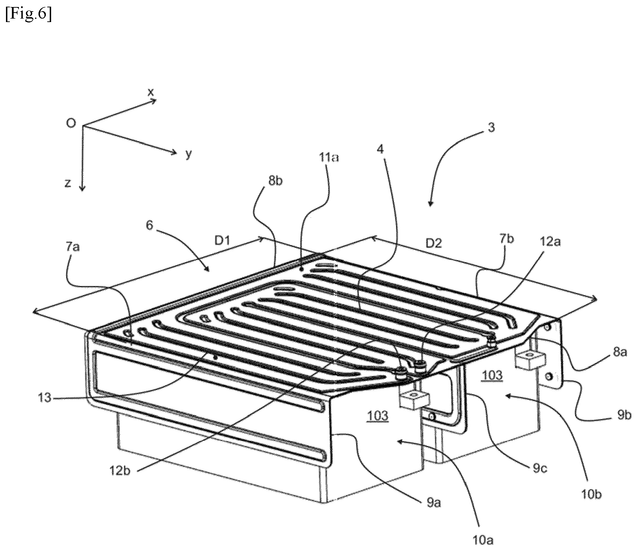

Sur la figure 6, le condenseur 3 est représenté dans un repère orthonormé Oxyz qui comprend un axe longitudinal Ox, un axe latéral Oy et un axe transversal Oz. Le condenseur 3 comprend une paroi principale 6 qui s'étend à l'intérieur d'un plan parallèle au plan Oxy. La paroi principale 6 est agencée sensiblement en un quadrilatère qui comporte deux extrémités longitudinales de la paroi principale 7a, 7b, opposées l'une à l'autre et ménagées à une première distance D1 l'une de l'autre, et deux extrémités latérales de la paroi principale 8a, 8b, opposées l'une à l'autre et ménagées à une deuxième distance D2 l'une de l'autre.

Selon la variante de réalisation illustrée, le condenseur 3 comprend aussi trois parois secondaires 9a, 9b, 9c qui s'étendent respectivement dans un plan parallèle au plan Oyz. Parmi les trois parois secondaires 9a, 9b, 9c, on distingue une première paroi secondaire latérale 9a qui équipe une première extrémité longitudinale de la paroi principale 7a, une deuxième paroi secondaire latérale 9b qui équipe une deuxième extrémité longitudinale de la paroi principale 7b et une paroi secondaire intermédiaire 9c qui est interposée entre les parois secondaires latérales 9a, 9b en étant disposée ici à une égale distance de la première paroi secondaire latérale 9a et de la deuxième paroi secondaire latérale 9b.

La première paroi secondaire latérale 9a et la paroi secondaire intermédiaire 9c délimite avec une portion de la paroi principale 6 une première chambre 10a qui est destinée à recevoir un premier élément de batterie 103. La deuxième paroi secondaire latérale 9b et la paroi secondaire intermédiaire 9c délimite avec une autre portion de la paroi principale 6 une deuxième chambre 10b qui est destinée à recevoir un deuxième élément de batterie 103.

La paroi principale 6 loge le circuit de fluide de refroidissement 4 qui serpente à l'intérieur de la paroi principale 6, au-dessus de la première chambre 10a et au-dessus de la deuxième chambre 10b. Selon un mode de réalisation, le circuit de fluide de refroidissement 4 est ménagé dans une épaisseur de la paroi principale 6. Selon un autre mode de réalisation, la paroi principale 6 est formée de deux coques apposées l'une contre l'autre, au moins une coque comportant un bossage qui délimite une cavité formant le circuit de fluide de refroidissement 4. Dans ce cas-là, le circuit de fluide de refroidissement 4 est ménagé en relief de l'une des coques au moins.

La paroi principale 6 comporte une première face 11a, supérieure sur la figure 6, qui est pourvue d'une arrivée de fluide de refroidissement 12a et d'une sortie de fluide de refroidissement 12b. L'arrivée de fluide de refroidissement 12a est prévu pour permettre une admission d'un fluide de refroidissement 13 à l'intérieur du circuit de fluide de refroidissement 4 tandis que la sortie de fluide de refroidissement 12b est prévu pour permettre une évacuation du fluide de refroidissement 13 hors du circuit de fluide de refroidissement 4. Le fluide de refroidissement 13 est par exemple du dioxyde de carbone ou analogue. On comprend qu'à partir d'une circulation du fluide de refroidissement 13 à l'intérieur du circuit de fluide de refroidissement 4, le fluide de refroidissement 13 refroidit la paroi principale 6 pour la maintenir à une température inférieure à une température de condensation du fluide diélectrique 1, ce qui garantit qu'à son contact, le fluide diélectrique 1 passe à l'état liquide.

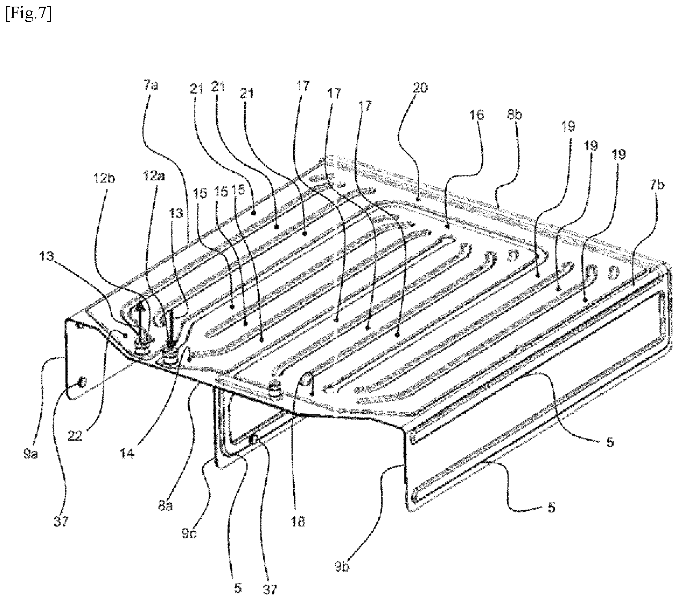

Tel que cela est plus visible sur la figure 7, l'arrivée de fluide de refroidissement 12a et la sortie de fluide de refroidissement 12b sont ménagées à proximité d'une première extrémité latérale de la paroi principale 8a et le circuit de fluide de refroidissement 4 s'étend depuis l'arrivée de fluide de refroidissement 12a jusqu'à la sortie du fluide de refroidissement 12b. Le circuit de fluide de refroidissement 4 comporte par exemple plusieurs branches de circulation du fluide de refroidissement 15, 17, 19, 21 qui sont ménagées en parallèle les unes des autres. Ainsi selon l'exemple illustré, l'arrivée de fluide de refroidissement 12a est en communication fluidique avec un répartiteur 14 qui alimente trois premières branches de circulation de fluide de refroidissement 15 parallèles les unes aux autres. Ces trois premières branches de circulation de fluide de refroidissement 15 débouchent à l'intérieur d'un premier collecteur 16 qui est ménagé à proximité d'une deuxième extrémité latérale de la paroi principale 8b. Aussi, à l'intérieur des premières branches de circulation de fluide de refroidissement 15, le fluide de refroidissement 13 parcourt sensiblement la deuxième distance D2. Le premier collecteur 16 est en communication fluidique avec trois deuxièmes branches de circulation de fluide de refroidissement 17 qui sont ménagées en parallèle les unes des autres. Les trois deuxièmes branches de circulation de fluide de refroidissement 17 s'étendent depuis le premier collecteur 16 jusqu'à un deuxième collecteur 18 qui est ménagée à proximité de la première extrémité latérale de la paroi principale 8a. Aussi, à l'intérieur des deuxièmes branches de circulation de fluide de refroidissement 17, le fluide de refroidissement 13 parcourt à nouveau sensiblement la deuxième distance D2. Le deuxième collecteur 18 est en communication fluidique avec trois troisièmes branches de circulation de fluide de refroidissement 19 qui sont ménagées en parallèle les unes des autres, l'une des troisièmes branches de circulation du fluide de refroidissement 19 bordant la deuxième extrémité longitudinale de la paroi principale 7b. Les trois troisièmes branches de circulation de fluide de refroidissement 19 s'étendent depuis le deuxième collecteur 18 jusqu'à un troisième collecteur 20 qui est ménagée à proximité de la deuxième extrémité latérale de la paroi principale 8b et qui s'étend le long de la deuxième extrémité latérale de la paroi principale 8b jusqu'à la première extrémité longitudinale de la paroi principale 7a. Aussi, à l'intérieur des troisièmes branches de circulation de fluide de refroidissement 19, le fluide de refroidissement 13 parcourt à nouveau sensiblement la deuxième distance D2. Aussi, à l'intérieur du troisième collecteur 20, le fluide de refroidissement 13 parcourt sensiblement la première distance D1. Le troisième collecteur 20 est en communication fluidique avec trois quatrièmes branches de circulation de fluide de refroidissement 21 qui sont ménagées en parallèle les unes des autres, l'une des quatrièmes branches de circulation du fluide de refroidissement 21 bordant la première extrémité longitudinale de la paroi principale 7a. Les trois quatrièmes branches de circulation de fluide de refroidissement 21 s'étendent depuis le troisième collecteur 20 jusqu'à un quatrième collecteur 22 qui est pourvu de la sortie du fluide de refroidissement 12b. On comprend que le nombre de branches de circulation de fluide de refroidissement 15, 17, 19, 21 disposées entre deux collecteurs 16, 18, 20 ou entre un collecteur 16, 18, 20 et le répartiteur 14 ainsi que le nombre de collecteurs 16, 18, 20 sont susceptibles d'être distincts de ceux précédemment énoncés.

Le fait que le fluide de refroidissement 13 parcourt à plusieurs reprises la deuxième distance D2 et la première distance D1 permet un refroidissement de l'ensemble de la surface de la paroi principale 6, et consécutivement un refroidissement du fluide diélectrique 1 qui vient au contact de la paroi principale 6 après sa vaporisation au contact des éléments de batterie 103.

Il est notable que la paroi principale et les différentes branches de circulation du fluide de refroidissement qui y sont formées sont configurées de sorte à ce que le circuit de fluide de refroidissement 4 est agencé dans une zone centrale 61 de la paroi principale 6.

Il va maintenant s'agir de décrire, à la suite de la description du circuit de fluide de refroidissement 4, le circuit de fluide diélectrique 5, notamment en référence aux figures 6 à 9, le circuit de fluide diélectrique 5 étant réalisé dans l'épaisseur du condenseur, c'est-à-dire en étant intégré dans l'une et ou l'autre de parois formant le condenseur 3.

Tel que cela sera décrit ci-après, et pour faire suite à ce qui précède sur la position dans une zone centrale 61 du circuit de fluide de refroidissement, le circuit de fluide diélectrique 5 est agencé dans le condenseur de sorte à laisser dégager cette zone centrale formée dans la paroi principale, soit en s'étendant sur d'autres parois du condenseur que la paroi principale, et/ou en s'étendant sur une zone périphérique 60 de la paroi principale.

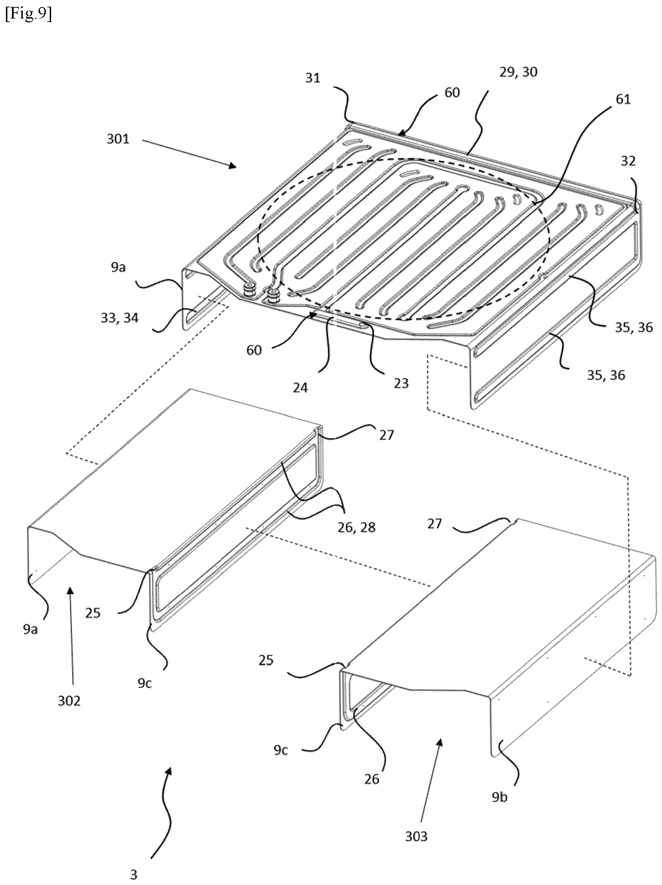

Notamment, le circuit peut être réalisé par des emboutis formés respectivement dans l'une et ou l'autre de deux coques qui forment chacune des parois une fois assemblées l'une contre l'autre. Dans ce contexte, et selon une forme de réalisation rendue plus visible sur la figure vue éclatée de la figure 9, les parois 6, 9a, 9b, 9c peuvent être formées à partir de trois coques 301, 302, 303, notamment métalliques, conformées en U dont une première coque 301 logeant une deuxième coque 302 et une troisième coque 303, le circuit de fluide de refroidissement 4 et le circuit de fluide diélectrique 5 étant ménagés entre les coques 301, 302, 303, notamment à partir d'un emboutissage de ces dernières. Les coques 301, 302, 303 sont par exemple brasées ou soudées entre elles. On comprend que dans cette variante de réalisation, la deuxième coque et troisième coque sont dimensionnées pour délimiter chacune une chambre de réception d'un élément de stockage électrique.

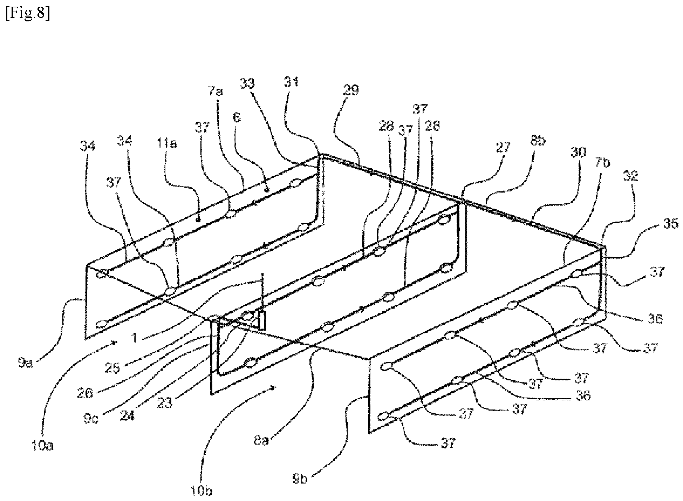

Le circuit de fluide diélectrique peut notamment être décrit en référence aux figures 8 et 9, illustrant schématiquement et dans une représentation éclatée ce circuit.

La première face 11a de la paroi principale 6 est pourvue d'une arrivée de fluide diélectrique 23 qui est ménagée à proximité de la première extrémité latérale de la paroi principale 8a. L'arrivée de fluide diélectrique 23 permet une admission du fluide diélectrique 1 à l'intérieur du circuit de fluide diélectrique 5. L'arrivée de fluide diélectrique 23 est en communication fluidique avec un premier canal de fluide diélectrique 24 qui longe la première extrémité latérale de la paroi principale 8a entre l'arrivée de fluide diélectrique 23 et un premier point de circulation du fluide diélectrique 25 qui est situé à l'aplomb de la paroi secondaire intermédiaire 9c.

Plus particulièrement, le premier canal de fluide diélectrique 24 peut être formé par un embouti formé dans la première coque 301 porteur de l'arrivé de fluide diélectrique et par une surface plane de la deuxième ou troisième coque. Et le premier point de circulation peut être formé par deux emboutis en regard respectivement formés dans les parois des deuxième et troisième coques participant à former la paroi secondaire intermédiaire.

Le premier point de circulation du fluide diélectrique 25 est en communication fluidique avec un deuxième canal de fluide diélectrique 26 qui s'étend à l'intérieur de la paroi secondaire intermédiaire 9c jusqu'à un deuxième point de circulation du fluide diélectrique 27 situé à proximité de la deuxième extrémité latérale de la paroi principale 8b. Le deuxième canal de fluide diélectrique 26 comporte deux premières branches de circulation du fluide diélectrique 28 parallèles l'une à l'autre.

Le deuxième point de circulation du fluide diélectrique 27 est en communication fluidique avec un troisième canal de fluide diélectrique 29 et un quatrième canal de fluide diélectrique 30 qui s'étendent l'un et l'autre le long de la deuxième extrémité latérale de la paroi principale 8b.

Le troisième canal de fluide diélectrique 29 s'étend entre le deuxième point de circulation du fluide diélectrique 27 et un quatrième point de circulation du fluide diélectrique 31 qui est situé à l'aplomb de la première paroi secondaire latérale 9a.

Le quatrième point de circulation du fluide diélectrique 31 est en communication fluidique avec un cinquième canal de fluide diélectrique 33 qui s'étend à l'intérieur de la première paroi secondaire latérale 9a et qui comporte deux deuxièmes branches de circulation du fluide diélectrique 34 parallèles l'une à l'autre. Les deuxièmes branches de circulation du fluide diélectrique 34 s'étendent depuis la deuxième extrémité latérale de la paroi principale 8b jusqu'à la première extrémité latérale de la paroi principale 8b.

Le quatrième canal de fluide diélectrique 30 s'étend entre le deuxième point de circulation du fluide diélectrique 27 et un cinquième point de circulation du fluide diélectrique 32 qui est situé à l'aplomb de la deuxième paroi secondaire latérale 9b.

A l'intérieur des canaux de circulation du fluide diélectrique, le fluide diélectrique 1 parcourt sensiblement la deuxième distance D2, ce qui permet une projection du fluide diélectrique sur l'ensemble d'une première dimension, ici la longueur, des éléments de batterie 103. De plus, le fait que les canaux de circulation comprennent plusieurs branches de circulation du fluide diélectrique permet une pulvérisation du fluide diélectrique sur des hauteurs différentes des éléments de batterie, respectivement à une seconde dimension des éléments de batterie parallèle à la direction d'empilement des étages, et donc une homogénéisation de l'opération de refroidissement de l'élément de batterie considéré.

Le cinquième point de circulation du fluide diélectrique 32 est en communication fluidique avec un sixième canal de fluide diélectrique 35 qui s'étend à l'intérieur de la deuxième paroi secondaire latérale 9b et qui comporte deux troisièmes branches de circulation du fluide diélectrique 36 parallèles l'une à l'autre. Les troisièmes branches de circulation du fluide diélectrique 36 s'étendent depuis la deuxième extrémité latérale de la paroi principale 8b jusqu'à la première extrémité latérale de la paroi principale 8b. Ainsi, à l'intérieur du sixième canal de fluide diélectrique 35, le fluide diélectrique 1 parcourt sensiblement la deuxième distance D2.

Chaque branche de circulation du fluide diélectrique 28, 34, 36 est équipé d'une pluralité de buses de projection 37 du fluide diélectrique 1 vers la chambre 10a, 10b que participent à border les parois secondaires 9a, 9b, 9c. Selon l'exemple illustré chaque branche de circulation du fluide diélectrique 28, 34, 36 est équipée de quatre buses de projection 37. Le nombre de buses de projection 37 équipant une branche de circulation du fluide diélectrique 28, 34, 36 est susceptible d'être différent.

On note que les premières branches de circulation du fluide diélectrique 28 sont pourvues d'un nombre de buses de projection 37 qui est équivalent au double du nombre de buses de projection 37 qu'équipent respectivement les deuxièmes branches de circulation du fluide diélectrique 34 et les troisièmes branches de circulation du fluide diélectrique 36, pour pulvériser du fluide diélectrique 1 vers la première chambre 10a et vers la deuxième chambre 10b, en raison du fait que la paroi secondaire intermédiaire 9c, qui est équipée des premières branches de circulation du fluide diélectrique 28, borde les deux chambres 10a, 10b. On comprend que les buses de projection 37 équipant les deuxièmes branches de circulation du fluide diélectrique 34 sont destinées à pulvériser le fluide diélectrique 1 vers la première chambre 10a et que les buses de projection 37 équipant les troisièmes branches de circulation du fluide diélectrique 36 sont destinées à pulvériser le fluide diélectrique 1 vers la deuxième chambre 10b.

La description et les figures correspondantes, notamment la figure 9, illustrent bien la caractéristique selon laquelle le circuit de fluide de refroidissement 4 est ménagé uniquement dans l'épaisseur de la paroi principale 6, et dans une zone centrale 61, tandis que le circuit de fluide diélectrique 5 est configuré pour dégager cette zone centrale et ne pas pénaliser l'action du condenseur sur le fluide diélectrique vaporisé s'étend. Notamment, le circuit de fluide diélectrique peut s'étendre dans l'épaisseur de l'une et/ou l'autre des parois secondaires 9a, 9, 9c, et il peut s'étendre en bordure de la paroi principale, dans une zone périphérique 60.

## Revendications

1. Condenseur (3) pour un dispositif de refroidissement (2) d'au moins un élément de batterie (103) d'un véhicule automobile, configuré pour liquéfier un fluide diélectrique déposé sous forme de vapeur en surface dudit condenseur, **caractérisé en ce que** le condenseur comporte au moins une paroi principale (6) et une pluralité de parois secondaires (9a, 9b, 9c) formant saillie de la paroi principale (6) et participant à former une chambre de réception (10a, 10b) d'un ou plusieurs éléments de batterie (103), le condenseur comportant un circuit de fluide de refroidissement (4) ménagé dans l'épaisseur de la paroi principale (6) et au moins un circuit de fluide diélectrique (5) sous forme liquide ménagé dans l'épaisseur d'au moins une paroi secondaire, ledit circuit de fluide diélectrique étant équipé d'au moins une buse de projection (37) du fluide diélectrique.

2. Condenseur selon la revendication 1, dans lequel le circuit de fluide de refroidissement (4) est ménagé uniquement dans l'épaisseur de la paroi principale (6) et dans lequel le circuit de fluide diélectrique (5) s'étend dans l'épaisseur de la paroi principale (6) et de chacune des parois secondaires (9a, 9, 9c).

3. Condenseur selon la revendication 2, dans lequel le circuit de fluide diélectrique (5) est ménagé dans une zone périphérique (60) de la paroi principale (6), de manière à dégager une zone centrale (61) pour le circuit de fluide de refroidissement (4).

4. Condenseur selon la revendication 2 ou 3, dans lequel un même côté de la paroi principale (6) est équipé d'une arrivée de fluide diélectrique (23), de l'arrivée de fluide de refroidissement (12a) et de la sortie de fluide de refroidissement (12b).

5. Condenseur (3) selon l'une des revendications précédentes, dans lequel la pluralité de parois secondaires (9a, 9b, 9c) formant saillie de la paroi principale comporte une première paroi secondaire latérale (9a) qui équipe une première extrémité longitudinale de la paroi principale (7a), une deuxième paroi secondaire latérale (9b) qui équipe une deuxième extrémité longitudinale de la paroi principale (7b) et une paroi secondaire intermédiaire (9c) qui est interposée entre les parois secondaires latérales (9a, 9b), la paroi secondaire intermédiaire participant à délimiter avec une partie de la paroi principale et respectivement l'une et l'autre des parois secondaires latérales deux chambres de réception (10a, 10b) pour un élément de batterie.

6. Condenseur (3) selon la revendication précédente, dans lequel le circuit de fluide diélectrique (5) compte plusieurs branches (28) en parallèle sur chacune des parois secondaires.

7. Condenseur (3) selon l'une des revendications précédentes, dans lequel des buses de projection (37) sont disposées sur chacune des faces opposées de la paroi secondaire intermédiaire (9c).

8. Condenseur (3) selon l'une des revendications précédentes, dans lequel la paroi principale (6) et chacune des parois secondaires (9a, 9b, 9c) sont formées de deux coques distinctes et apposées l'une contre l'autre, au moins une coque comportant un bossage qui délimite une cavité formant partie du circuit de fluide de refroidissement (4) ou partie du circuit de fluide diélectrique (5).

9. Condenseur (3) selon l'une des revendications précédentes, **caractérisé en ce que** les parois principale (6) et secondaires (9a, 9b, 9c) sont formées à partir de trois coques (301, 302, 303) conformées en U avec une première coque (301) qui chevauche à la fois une deuxième coque (302) et une troisième coque (303) disposées côte à côte, le circuit de fluide de refroidissement (4) et le circuit de fluide diélectrique (5) étant ménagés entre des déformations réalisées respectivement sur l'une ou l'autre des coques (301, 302, 303).

10. Dispositif de refroidissement (2) comprenant un premier boîtier (101) et une pluralité d'étages (106a, 106b) d'éléments de batterie (103) disposés dans le premier boîtier, chaque étage (106a, 106b) d'éléments de batterie (103) étant équipé d'au moins un condenseur (3) selon l'une des revendications précédentes, le condenseur (3) étant disposé par rapport aux éléments de batterie de l'étage correspondant de manière à ce que les buses puissent projeter le fluide diélectrique (1) sur les éléments de batterie (103) d'un même étage (106a, 106b), ledit système comportant en outre un bac de récupération (108) du fluide diélectrique (1) qui est commun à la pluralité d'étages (106a, 106b) d'éléments de batterie (103), le dispositif de refroidissement (2) comprenant des moyens de recirculation (117) du fluide diélectrique (1) qui sont pourvus d'une pompe (115) et qui relient le bac de récupération (108) à au moins une arrivée de fluide diélectrique (23) que comprend chacun des circuits de fluide diélectrique (5).

## Patentansprüche

1. Kondensator (3) für eine Kühlvorrichtung (2) mindestens eines Batterieelements (103) eines Kraftfahrzeugs, konfiguriert zur Verflüssigung eines dielektrischen Fluids, das in Dampfform auf der Oberfläche des Kondensators abgelagert ist, **dadurch gekennzeichnet, dass** der Kondensator mindestens eine Hauptwand (6) und eine Vielzahl von Nebenwänden (9a, 9b, 9c) aufweist, die von der Hauptwand (6) vorspringen und zur Bildung einer Aufnahmekammer (10a, 10b) für ein oder mehrere Batterieelemente (103) beitragen, wobei der Kondensator einen Kühlfluidkreislauf (4) aufweist, der in der Dicke der Hauptwand (6) angeordnet ist, und mindestens einen Kreislauf für dielektrisches Fluid (5) in flüssiger Form, der in der Dicke mindestens einer Nebenwand angeordnet ist, wobei der dielektrische Fluidkreislauf mit mindestens einer Projektionsdüse (37) für das dielektrische Fluid ausgestattet ist.

2. Kondensator nach Anspruch 1, bei dem der Kühlfluidkreislauf (4) nur in der Dicke der Hauptwand (6) angeordnet ist und bei dem sich der dielektrische Fluidkreislauf (5) in der Dicke der Hauptwand (6) und jeder der Nebenwände (9a, 9, 9c) erstreckt.

3. Kondensator nach Anspruch 2, bei dem der dielektrische Fluidkreislauf (5) in einem Randbereich (60) der Hauptwand (6) angeordnet ist, um einen zentralen Bereich (61) für den Kühlfluidkreislauf (4) freizugeben.

4. Kondensator nach Anspruch 2 oder 3, bei dem dieselbe Seite der Hauptwand (6) mit einem dielektrischen Fluideinlass (23), dem Kühlfluideinlass (12a) und dem Kühlfluidauslass (12b) ausgestattet ist.

5. Kondensator (3) nach einem der vorhergehenden Ansprüche, bei dem die Vielzahl von Nebenwänden (9a, 9b, 9c), die von der Hauptwand vorspringen, eine erste seitliche Nebenwand (9a) umfasst, die ein erstes Längsende der Hauptwand (7a) ausstattet, eine zweite seitliche Nebenwand (9b), die ein zweites Längsende der Hauptwand (7b) ausstattet, und eine Zwischennebenwand (9c), die zwischen den seitlichen Nebenwänden (9a, 9b) angeordnet ist, wobei die Zwischennebenwand dazu beiträgt, mit einem Teil der Hauptwand und jeweils der einen und der anderen der seitlichen Nebenwände zwei Aufnahmekammern (10a, 10b) für ein Batterieelement abzugrenzen.

6. Kondensator (3) nach dem vorhergehenden Anspruch, bei dem der dielektrische Fluidkreislauf (5) mehrere parallele Zweige (28) auf jeder der Nebenwände aufweist.

7. Kondensator (3) nach einem der vorhergehenden Ansprüche, bei dem Projektionsdüsen (37) auf jeder der gegenüberliegenden Flächen der Zwischennebenwand (9c) angeordnet sind.

8. Kondensator (3) nach einem der vorhergehenden Ansprüche, bei dem die Hauptwand (6) und jede der Nebenwände (9a, 9b, 9c) aus zwei verschiedenen Schalen gebildet sind, die aneinander angebracht sind, wobei mindestens eine Schale eine Erhebung aufweist, die einen Hohlraum begrenzt, der einen Teil des Kühlfluidkreislaufs (4) oder einen Teil des dielektrischen Fluidkreislaufs (5) bildet.

9. Kondensator (3) nach einem der vorhergehenden Ansprüche, **dadurch gekennzeichnet, dass** die Haupt- (6) und Nebenwände (9a, 9b, 9c) aus drei U-förmigen Schalen (301, 302, 303) gebildet sind, wobei eine erste Schale (301) sowohl eine zweite Schale (302) als auch eine dritte Schale (303) überlappt, die nebeneinander angeordnet sind, wobei der Kühlfluidkreislauf (4) und der dielektrische Fluidkreislauf (5) zwischen Verformungen angeordnet sind, die jeweils an einer oder der anderen der Schalen (301, 302, 303) ausgeführt sind.

10. Kühlvorrichtung (2), umfassend ein erstes Gehäuse (101) und eine Vielzahl von Ebenen (106a, 106b) von Batterieelementen (103), die in dem ersten Gehäuse angeordnet sind, wobei jede Ebene (106a, 106b) von Batterieelementen (103) mit mindestens einem Kondensator (3) nach einem der vorhergehenden Ansprüche ausgestattet ist, wobei der Kondensator (3) in Bezug auf die Batterieelemente der entsprechenden Ebene so angeordnet ist, dass die Düsen das dielektrische Fluid (1) auf die Batterieelemente (103) einer gleichen Ebene (106a, 106b) projizieren können, wobei das System ferner eine Auffangwanne (108) für das dielektrische Fluid (1) umfasst, die der Vielzahl von Ebenen (106a, 106b) von Batterieelementen (103) gemeinsam ist, wobei die Kühlvorrichtung (2) Mittel zur Rezirkulation (117) des dielektrischen Fluids (1) umfasst, die mit einer Pumpe (115) versehen sind und die Auffangwanne (108) mit mindestens einem dielektrischen Fluideinlass (23) verbinden, den jeder der dielektrischen Fluidkreisläufe (5) umfasst.

## Claims

1. Condenser (3) for a cooling device (2) of at least one battery element (103) of a motor vehicle, configured to liquefy a dielectric fluid deposited in vapor form on the surface of said condenser, **characterized in that** the condenser comprises at least one main wall (6) and a plurality of secondary walls (9a, 9b, 9c) projecting from the main wall (6) and participating in forming a reception chamber (10a, 10b) for one or more battery elements (103), the condenser comprising a cooling fluid circuit (4) arranged within the thickness of the main wall (6) and at least one dielectric fluid circuit (5) in liquid form arranged within the thickness of at least one secondary wall, said dielectric fluid circuit being equipped with at least one projection nozzle (37) for the dielectric fluid.

2. Condenser according to claim 1, wherein the cooling fluid circuit (4) is arranged only within the thickness of the main wall (6) and wherein the dielectric fluid circuit (5) extends within the thickness of the main wall (6) and of each of the secondary walls (9a, 9, 9c).

3. Condenser according to claim 2, wherein the dielectric fluid circuit (5) is arranged in a peripheral zone (60) of the main wall (6), so as to clear a central zone (61) for the cooling fluid circuit (4).

4. Condenser according to claim 2 or 3, wherein the same side of the main wall (6) is equipped with a dielectric fluid inlet (23), the cooling fluid inlet (12a) and the cooling fluid outlet (12b).

5. Condenser (3) according to one of the preceding claims, wherein the plurality of secondary walls (9a, 9b, 9c) projecting from the main wall comprises a first lateral secondary wall (9a) that equips a first longitudinal end of the main wall (7a), a second lateral secondary wall (9b) that equips a second longitudinal end of the main wall (7b) and an intermediate secondary wall (9c) that is interposed between the lateral secondary walls (9a, 9b), the intermediate secondary wall participating in delimiting with a part of the main wall and respectively one and the other of the lateral secondary walls two reception chambers (10a, 10b) for a battery element.

6. Condenser (3) according to the preceding claim, wherein the dielectric fluid circuit (5) has several branches (28) in parallel on each of the secondary walls.

7. Condenser (3) according to one of the preceding claims, wherein projection nozzles (37) are arranged on each of the opposite faces of the intermediate secondary wall (9c).

8. Condenser (3) according to one of the preceding claims, wherein the main wall (6) and each of the secondary walls (9a, 9b, 9c) are formed of two distinct shells placed against each other, at least one shell comprising a boss that delimits a cavity forming part of the cooling fluid circuit (4) or part of the dielectric fluid circuit (5).

9. Condenser (3) according to one of the preceding claims, **characterized in that** the main (6) and secondary walls (9a, 9b, 9c) are formed from three U-shaped shells (301, 302, 303) with a first shell (301) that overlaps both a second shell (302) and a third shell (303) arranged side by side, the cooling fluid circuit (4) and the dielectric fluid circuit (5) being arranged between deformations made respectively on one or the other of the shells (301, 302, 303).

10. Cooling device (2) comprising a first housing (101) and a plurality of levels (106a, 106b) of battery elements (103) arranged in the first housing, each level (106a, 106b) of battery elements (103) being equipped with at least one condenser (3) according to one of the preceding claims, the condenser (3) being arranged in relation to the battery elements of the corresponding level so that the nozzles can project the dielectric fluid (1) onto the battery elements (103) of the same level (106a, 106b), said system further comprising a recovery tank (108) for the dielectric fluid (1) that is common to the plurality of levels (106a, 106b) of battery elements (103), the cooling device (2) comprising means for recirculating (117) the dielectric fluid (1) which are provided with a pump (115) and which connect the recovery tank (108) to at least one dielectric fluid inlet (23) included in each of the dielectric fluid circuits (5).
